Europäisches Patentamt
European Patent Office
Office européen des brevets

(11) Publication number: 0 342 939 A1

# EUROPEAN PATENT APPLICATION

(21) Application number: 89304957.7

(51) Int. Cl.4: G 03 C 1/84

(22) Date of filing: 16.05.89

(30) Priority: 18.05.88 JP 122262/88

(43) Date of publication of application: 23.11.89 Bulletin 89/47

(84) Designated Contracting States: DE FR GB IT NL

(71) Applicant: KONICA CORPORATION
No. 26-2, Nishishinjuku 1-chome Shinjuku-ku
Tokyo (JP)

(72) Inventor: Usagawa, Yasushi
Konica Corporation 1-Sakura-machi
Hino-shi Tokyo (JP)

Kagawa, Nobuaki
Konica Corporation 1-Sakura-machi
Hino-shi Tokyo (JP)

(74) Representative: Brock, Peter William et al
URQUHART-DYKES & LORD 91 Wimpole Street
London W1M 8AH (GB)

The title of the invention has been amended (Guidelines for Examination in the EPO, A-III, 7.3).

(54) **Silver halide photographic light sensitive material.**

(57) Asilver halide photographic light-sensitive material which contains a dye represented by the following formula I. The dye has excellent properties as antiirradiation or antihalation dye.

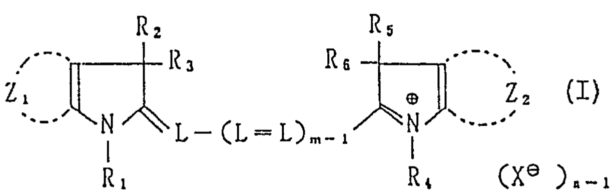

(I)

wherein $R_1$, $R_2$, $R_3$, $R_4$, $R_5$ and $R_6$ each represents an alkyl group; $Z_1$ and $Z_2$ each represents a group of non-metal atoms necessary to form a condensed benzene ring or a condensed naphthalene ring, provided that at least three of those groups represented by $R_1$, $R_2$, $R_3$, $R_4$, $R_5$, $R_6$, $Z_1$, and $Z_2$ are acid groups or groups substituted by an acid group; L represents a methine group; $X^{\ominus}$ represents an anion; m is an integer of 1, 2, or 3; and n is an integer of 1 or 2, provided that the n is 1 when the dye forms an intramolecular salt.

EP 0 342 939 A1

**Description**

# SILVER HALIDE PHOTOGRAPHIC LIGHT-SENSITIVE MATERIAL

## FIELD OF THE INVENTION

The present invention relates to a silver halide photographic light-sensitive material containing dyes, and more particularly to a silver halide photographic light-sensitive material having hydrophilic colloid layers which are dyed with dyes useful as light-absorbing dyes.

## BACKGROUND OF THE INVENTION

It is well-known that in a silver halide photographic light-sensitive material (hereinafter referred to as light-sensitive material), for the purpose of filtration, antihalation and antiirradiation layers or for the sensitivity control of its photographic emulsion, appropriate dyes absorbing specific wavelengths of light are incorporated into the lightsensitive material, and thus dyeing its hydrophilic colloid layers with such dyes are often performed.

The filter layer is positioned usually on the uppermost light-sensitive emulsion layer or between emulsion layers, and plays a role of making the incident light upon the emulsion layer into a light having a desired spectral composition. Also, for the purpose of improving the sharpness of a resulting photographic image, antihalation is often achieved by providing an antihalation layer between the emulsion layer and the support or on the back of the support to absorb the undesirable light reflected from the interface between the emulsion layer and the support or from the back of the support, or antiirradiation is often achieved by dyeing the emulsion layer to absorb the undesirable light reflected from or scattered by silver halide grains and the like.

Those dyes to be used for such purposes must satisfy the following requirements: They shall have appropriate absorption spectral characteristics according to the purpose for which they are to be used; shall be completely decolored during photographic processing and easily dissolved out of the light-sensitive material so that the light-sensitive material shows no residual dye stain after the processing: shall not have adverse effects such as fogging, desensitization, etc., upon the photographic emulsion; shall not diffuse from the dyed layer into other layers; and further, shall be excellent in the stability in time in its solution or in the photographic material and not be discolored.

Many attempts have been made so far to find dyes capable of meeting the above-mentioned requirements, and numerous dyes have hitherto been proposed. For example, there are those oxonol dyes as described in British Patent No. 506,385, U.S. Patent No. 3,247,127, Japanese Patent Examined Publication Nos. 22069/1964 and 13 168/1968; those styryl dyes as described in U.S. Patent No. 1,845,404; those merocyanine dyes as described in U.S. Patent No. 2,493,747, and those cyanine dyes as described in U.S. Patent No. 2,843,486. In fact, however. there are very few dyes capable of satisfying all the above requirements and suitably applicable to photographic materials.

## SUMMARY OF THE INVENTION

It is therefore an object of the present invention to provide a silver halide photographic light-sensitive material containing a dye which has a satisfactory absorbing spectral characteristic even in infrared regions, which is inactive to the photographic emulsion of the photographic material and capable of being decolored and dissolved out of the photographic material during photographic processing so that the photographic material shows little or no residual dye stain after the processing, and which has sensitizing effect on the photographic emulsion when used with a sensitizing dye.

The above object of the present invention is accomplished by a silver halide photographic light-sensitive material which comprises a hydrophilic colloid layer containing at least one of those dyes having the following Formula I:

Formula I

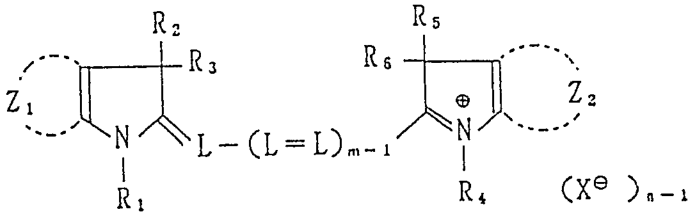

wherein $R_1$, $R_2$, $R_3$, $R_4$, $R_5$ and $R_6$ each represents an alkyl group: $Z_1$ and $Z_2$ each represents a group of non-metal atoms necessary to form a condensed benzene ring or a condensed naphthalene ring, provided that at least three of those groups represented by $R_1$, $R_2$, $R_3$, $R_4$, $R_5$, $R_6$, $Z_1$ and $Z_2$ are acid groups or groups substituted by an acid group L represents a methine group; $X^{\ominus}$ represents an anion; m is an integer of 1, 2 or 3; and n is an integer of 1 or 2, provided that the n is 1 when the dye forms an intramolecular salt.

## DETAILED DESCRIPTION OF THE INVENTION

The present invention will now be illustrated in detail.

In Formula I, at least three of those groups represented by the $R_1$, $R_2$, $R_3$, $R_4$, $R_5$, $R_6$, $Z_1$ and $Z_2$ are acid groups or groups substituted by an acid group such as sulfo group, carboxyl group, phosphonic acid group, phosphinic acid group, phosphate group, phosphoric acid amido group, etc.

The sulfo group and carboxyl group independently include their salts, e.g., alkali metal salts such as of sodium, potassium, etc., and organic ammonium salts such as of ammonium, triethylamine, pyridine, etc.

The phosphorus-containing acid substituent includes a

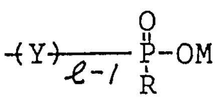

group, wherein M represents a hydrogen atom or a cation; R represents a hydrogen atom, an alkyl group, an alkoxy group or an OM group Y represents an oxygen atom, a sulfur atom or an imino group: and $\ell$ is an integer of 1 or 2.

The alkyl group represented by the R is preferably a lower alkyl group such as methyl, ethyl, propyl or the like, and the alkoxy group represented by the same is preferably a lower alkoxy group such as methoxy, ethoxy, propoxy or the like.

The cation represented by the M is an alkali metal cation such as of sodium or potassium, or an organic ammonium cation such as of ammonium, triethylamine pyridine or the like.

The alkyl group represented by each of the $R_1$, $R_2$, $R_3$, $R_4$, $R_5$ and $R_6$ is preferably a lower alkyl group having from 1 to 8 carbon atoms, such as methyl, ethyl, propyl, i-propyl, butyl or the like, and is preferably one having the foregoing acid-substituted group. but may also be one having a different group.

The benzene ring or naphthalene ring represented by the $Z_1$ or $Z_2$ may have directly or through a divalent linkage group a substituent such as a hydroxyl group, a cyano group, a halogen atom or the like besides the foregoing acid-substi tuent.

The methine group represented by the L may also have a substituent. The substituent is, for example, a substituted or unsubstituted lower alkyl group having from 1 to 5 carbon atoms, such as methyl, ethyl, 3-hydroxypropyl, 2-sulfoethyl, etc.; a halogen atom such as fluorine, chlorine, bromine, etc.; an aryl group such as phenyl group; an alkoxy group such as methoxy, ethoxy, etc.; a hydroxy group; an acyloxy group such as acetyloxy, etc.; or the like. Also, such substituents of the L may be linked with one another to form a 6-member ring containing three methine groups (e.g., 4,4-dimethyl-cyclohexene ring).

The anion represented by the $X^{\ominus}$ although not particularly restricted, is, for example, a halogen ion, p-toluenesulfonic acid ion, ethyl-sulfuric acid ion, or the like.

The following are examples of the dye represented by the foregoing Formula I to be used in this invention, but the invention is not limited by the examples.

<Exemplified Compounds>

(1)

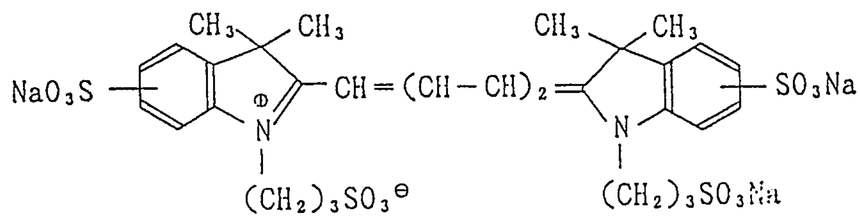

(2)

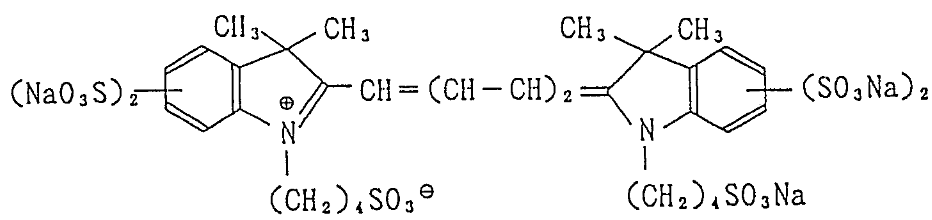

(3)

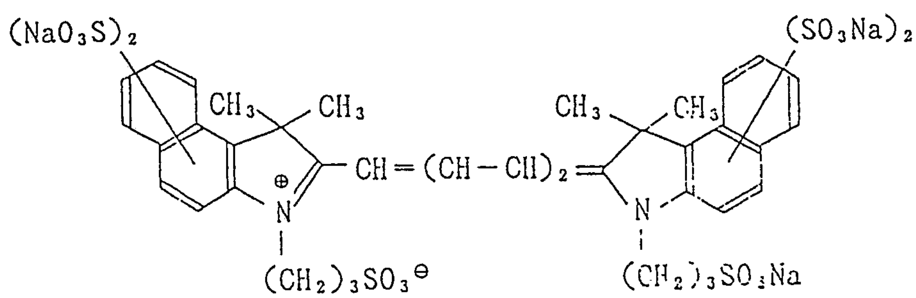

(4)

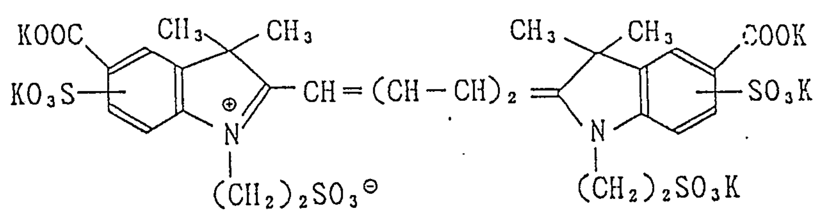

(5)

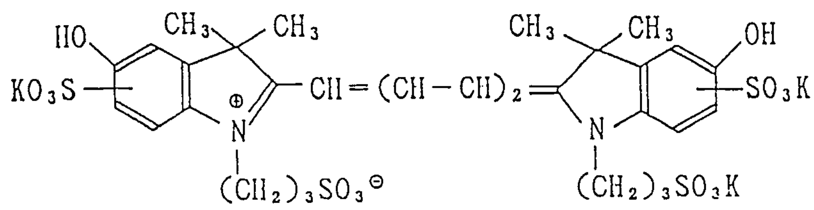

(6)

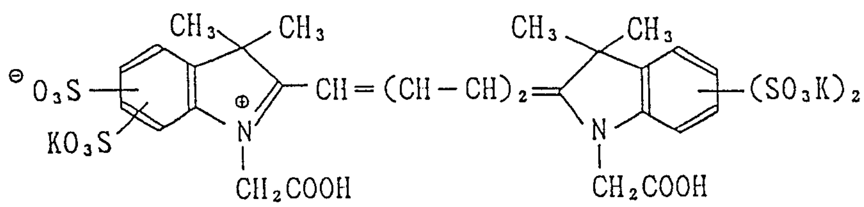

(7)

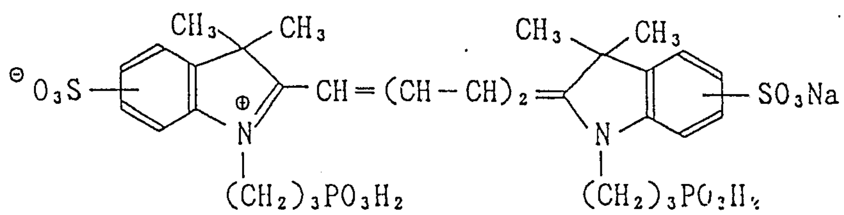

(8)

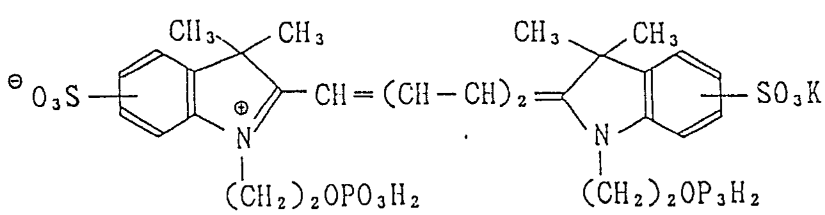

(9)

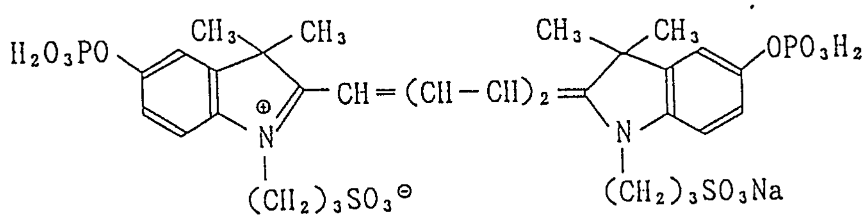

(10)

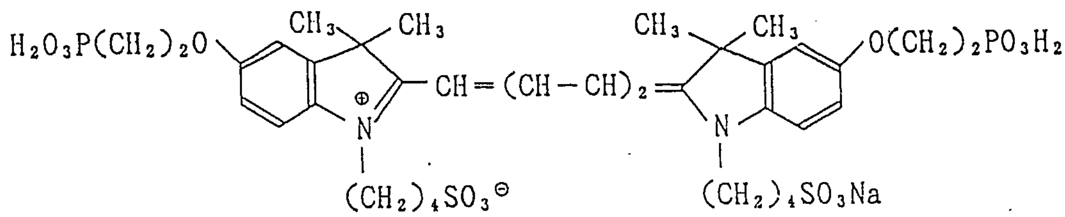

(11)

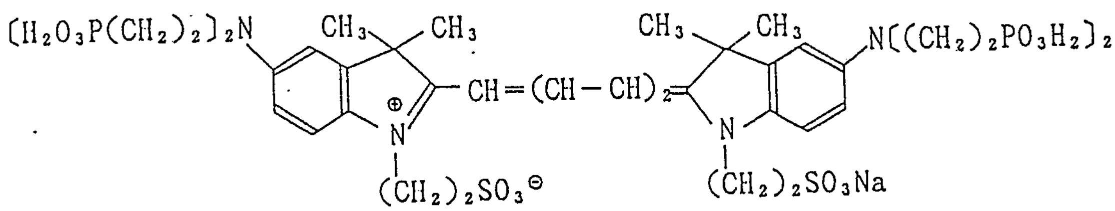

(12)

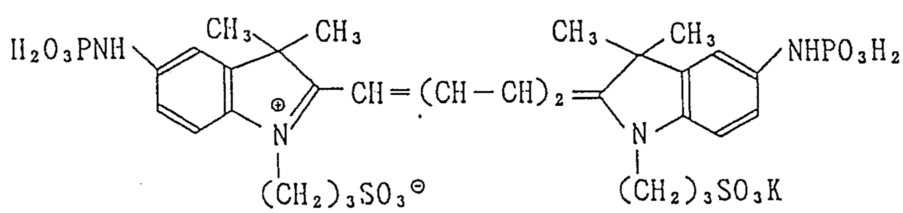

(13)

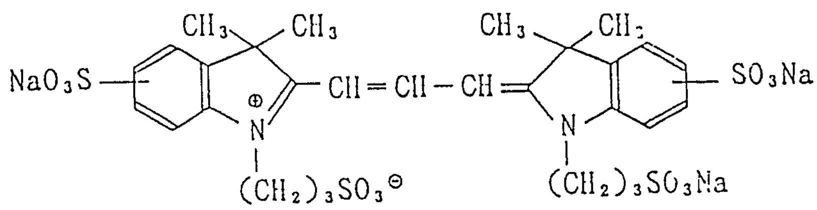

(14)

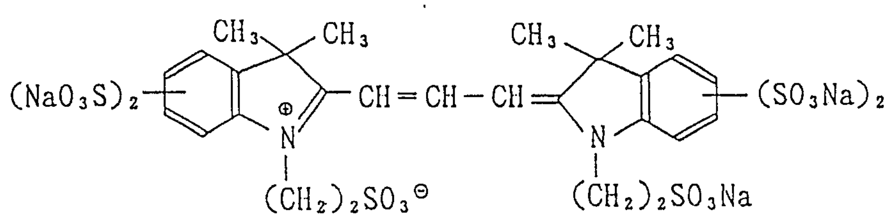

(15)

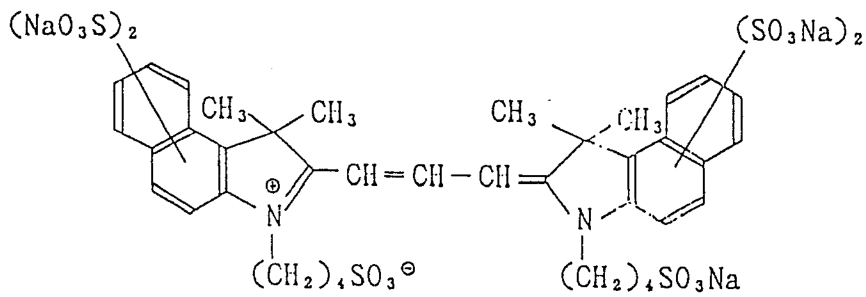

(16)

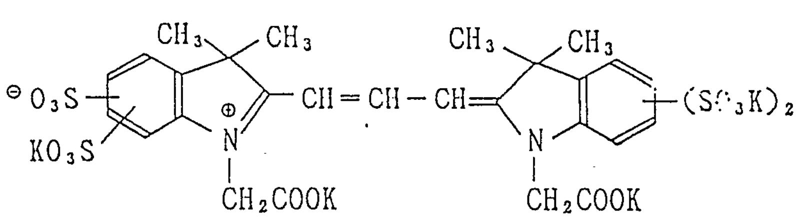

(17)

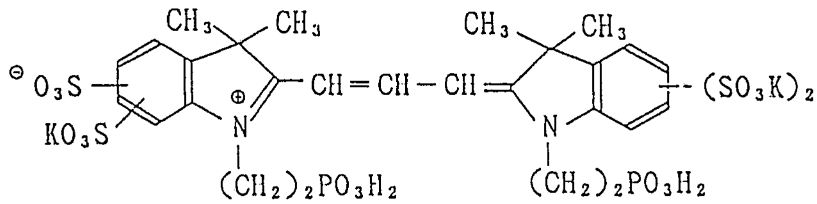

(18)

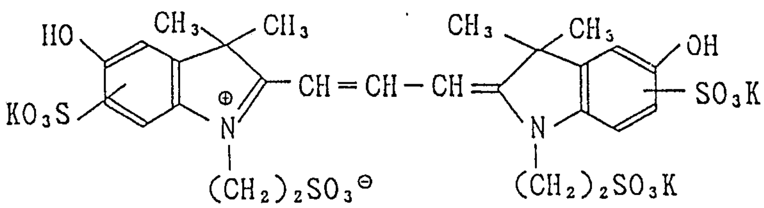

(19)

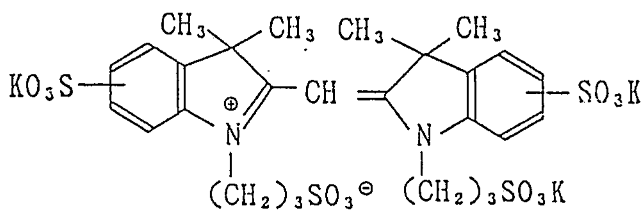

(20)

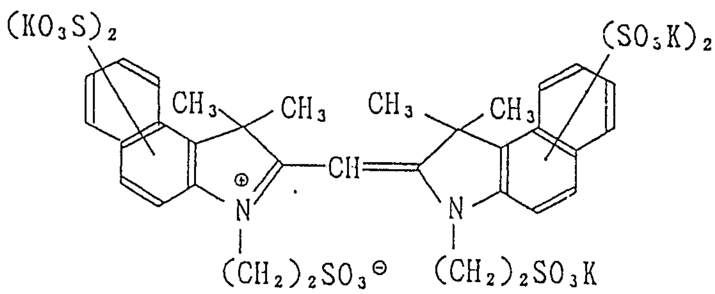

Any of these dyes having Formula I may be synthesized by making reference to those synthesis examples as described in J. Chem. Soc. p.189 (1933), U.S. Patent No. 2,895,955, and Japanese Patent Publication Open to Public Inspection (hereinafter referred to as Japanese Patent O.P.I. Publication) No. 123454/1987.

As the methine chain donor to the pentamethinecyanine dye of this invention propendianil hydrochloride is used, and as the methine chain doner to the trimethinecyanine dye of this invention diphenylformamidine hydrochloride is used.

In the case of monomethine dyes, their synthesis may be carried out likewise by using in usual manner an indolenine nucleus compound having an alkylthio group in the second position thereof. When 2 moles of an indolenine nucleus compound are used to react with 1 mole of a methine chain doner, a symmetrical-type compound of this invention can be obtained. As for an asymmetrical-type compound, its synthesis can be

made in the manner of first making the reaction of 1 mole of a methine chain donor with 1 mole of an indolenine nucleus compound to synthesize an aminopolymethine-substituted nucleus compound, and then making a further reaction of this compound with 1 mole of other appropriate indolenine nucleus compound.

Synthesis of the cyanine dye with its methine chain containing such a cyclic group as a cyclohexene ring according to this invention may be carried out in the manner of, for example, first making the reaction of an indolenine nucleus compound with isophorone to synthesize a cyclohexenylidene-substituted nucleus compound, and then making in usual manner a further reaction of this with an aminopolymethine-substituted indolenine compound or with an indolenine nucleus compound having an alkylthio group in the second position thereof.

Examples of the phosphorus compound to be introduced into the indolenine nucleus of the invention include phosphonic acid, phosphinic acid, phosphates, phosphoric acid amide and the like. For these compounds reference can be made to the description in the 'Yuki Rin Kagobuts (Organic Phosphorus Compounds)' in Gendai Yuki-Gosei Series, Part 5, compiled by 'The Society of Synthetic Organic Chemistry, Japan' (1971), Hakuhodo.

To be more concrete, methods for synthesizing $Br(CH_2)_3PO_3H_2$ as a quaternizing and alkylating agent are described in J. Am. Chem. Soc., p.1511, vol.66 (1944); J. Chem. Soc., p.3739 (1957); J. Am. Chem. Soc., p.253, vol.87 (1965); and the like.

The synthesis of $Br(CH_2)_4PO_3H_2$ is described in British Patent No. 886,270. The synthesis of $Br(CH_2)_2PO_3H_2$ is described in J. Am. Chem. Soc., p.679, vol.87 (1965) and Canadian Journal of Biochemistry, p.351, vol.46 (1968), and the like.

Methods for synthesizing the phosphoric ester compound include, for example, a method for esterifying a hydroxyl group by phosphorus pentaoxide, a method by phosphoric acid and phosphorus pentaoxide, and a method by phosphorochloridate, and the like, and for the synthesis reference can be made to those methods as described in Japanese Patent O.P.I. Publication Nos. 93791/1988, 88190/1988, 88194/1988 and 51308/1988. The other phosphorus compounds can also be synthesized in similar manner to the above-mentioned methods.

Such a phosphorus-containing group may be introduced into the indolenine nucleus after completion of the synthesis thereof or may be in advance introduced and condensed later with the indolenine nucleus to close its ring. For the quaternization of and condensation into a dye form of the indolenine nucleus by a phosphonic acid-substituted alkyl halide reference can be made to British Patent No. 886270.

The sulfonation of the indolenine nucleus may be made by introducing a sulfo group into the nucleus after the synthesis thereof or may be in advance introduced and condensed later with the indolenine nucleus to close its ring.

In the light-sensitive material of this invention, the dye represented by the foregoing Formula I may be used as an antiirradiation dye by being incorporated into a silver halide emulsion, and may also be used as a filter dye or antihalation dye by being incorporated into non-light-sensitive hydrophilic colloid layers. Also, two or more kinds of the dye may be used in combination or the dye may be used along with different other dyes depending on the purpose for which the dye is to be used.

Also, the dye of this invention, when added to an emulsion layer that has been sensitized by a sensitizing dye, shows an effect to further increase the sensitivity of the emulsion: the reason why such the effect is obtained is considered due to the interaction in energy between the dye of this invention and the sensitizing dye.

Incorporation of the dye of this invention into silver halide emulsion layers or other hydrophilic colloid layers may be easily carried out in usual manner. In general, the dye or an organic or inorganic alkali salt of the dye is dissolved into water to make a proper concentration-having aqueous dye solution to be added to a coating liquid, and the coating liquid is then coated by a known method, whereby the dye can be incorporated in the light-sensitive material. The amount of such the dye to be contained, although it differs according to the purpose for which it is used, is determined so that when coated it is normally from 1 to 800 $mg/m^2$ of the photographic material.

Examples of the light-sensitive material applicable to this invention include black-and-white photographic light-sensitive materials and color photographic light-sensitive materials. Examples of the former include those light- sensitive materials for graphic arts use, etc., in which two or more silver halide emulsion layers may be provided. In this instance, the coating weight of silver is preferably in the range of from 1 to 8 $g/m^2$.

The silver halide to be used in this invention may be any one of, e.g., silver chloride, silver bromide, silver iodide, silver chlorobromide, silver chloroiodide, silver iodobromide and silver chloroiodobromide.

The silver halide grain in a photographic emulsion may be a regular grain having a regular crystal in the cubic, octahedral or tetradecahedral form, an irregular grain having an irregular crystal in the spherical form, one having crystal defects such as twin faces or one in the complex form composed of these crystal forms.

The emulsion to be used may be either a monodisperse emulsion having a narrow distribution of silver halide grain diameters or a polydisperse emulsion having a wide distribution of the same.

The silver halide photographic emulsion usable in this invention may be prepared in accordance with well-known methods, such as those methods described in, e.g., Research Disclosure (RD), vol.176, No. 17643 (Dec. 1978), pp.22-23, and No. 1 8716 (Nov. 1978), p. 648.

The silver halide emulsion to be used in the method of this invention may or may not be chemically sensitized.

If it should be chemically sensitized, ordinary sulfur sensitizers, reduction sensitizers, noble-metal sensitizers or combination of these sensitizers may be used.

More particular chemical sensitizers include sulfur sensitizers such as allylthiocarbamide, thiourea, thiosulfate, thioether, cystine, etc.; noble-metal sensitizers such as potassium chloroaurate, aurous thiosulfate, potassium chloropalladate, etc.; reduction sensitizers such as stannous chloride, phenylhydrazine, reductone, etc.; and the like.

The silver halide emulsion to be used in this invention may, if necessary, be spectrally sensitized by well-known spectrally sensitizing dyes. As the spectrally sensitizing dye applicable to this invention those as described in Item IV of the foregoing Research Disclosure No.17643 may be used.

Various compounds may be added to the photographic emulsion of this invention in order to prevent the emulsion from possible speed decline and fogging that could occur during the manufacturing process, storage, or processing of the light-sensitive material. Such compounds include those very numerous known-for-long compounds such as nitrobenzimidazole, ammonium chloroplatinate, 4-hydroxy-6-methyl-1,3,3a,7-tetrazaindene, 1-phenyl-5-mercaptotetrazole, and many other heterocyclic compounds, mercury-containing compounds, mercapto compounds, metal salts, and the like.

As the binder or protective colloid for use in the light- sensitive material, gelatin is advantageously used, and besides, hydrophilic synthetic high-molecular materials may also be used. As the gelatin, lime-treated gelatin, acid-treated gelatin, gelatin derivatives and the like may be used.

For the light-sensitive material of this invention, in addition to the above-mentioned compounds, additives such as desensitizers, brightening agents, couplers, hardening agents, coating aids, plasticizers, lubricants, matting agents, high-boiling organic solvents, stabilizers, development accelerating agents, antistatic agents, antistain agents and the like may be used. As for these additives, those particular compounds as described in Items I to XVI of the foregoing Reseach Disclosure No. 17643 can be used.

For the processing of the light-sensitive material of this invention any of known methods may be used and any of known processing solutions may be used. The processing temperature is selected normally between 18° C and 50° C, but may be either lower than 18° C or higher than 50° C. Depending upon the purpose for which the light-sensitive material of this invention is to be used, either the processing for developing silver images (black-and-white development) or the color photographic processing for the formation of dye images may be applied.

The silver halide photographic light-sensitive material of this invention is capable of producing excellent quality images with little or no post-development residual color stain without imparing its sensitivity. Besides, the hydrophilic colloid layer of the silver halide photographic light-sensitive material of this invention is dyed with a water-soluble dye which is very excellent in respect of being well stable without adversely affecting the photographic characteristics of the photographic emulsion and capable of being easily decolored by photographic processing.

## EXAMPLES

Subsequently, the present invention will be illustrated further in detail by the following examples, but the invention is not limited to and by the examples.

## EXAMPLE 1

Three point five grams of gelatin were dissolved into 35 ml of distilled water, and to this were added 5 ml each of aqueous solution containing $2.0x10^{-4}$ mole Exemplified Dyes (13), (14) and (15) of this invention and further 1.25 ml of an aqueous 10% saponin solution and 0.75 ml of a 1% formalin solution, and then water was added to make the whole quantity 50 ml. this dye solution was coated on an acetyl cellulose film support and then dried, whereby Samples 1, 2 and 3 were prepared. In addition, Comparative Samples 4 and 5 were prepared in the same manner as in the above except that the following Comparative Dyes (A) and (B) were used in place of the dyes of this invention.

Comparative Dye (A)

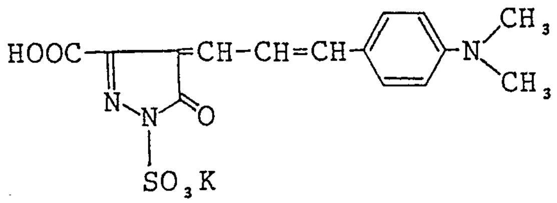

Comparative Dye (B)

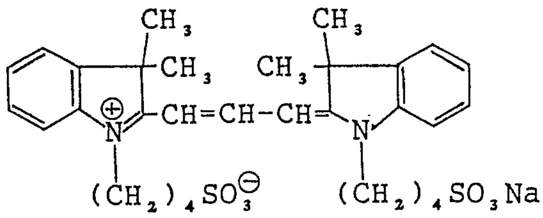

Each of these samples was immersed in a developer solution of the following composition for one minute at 25°C, then washed for 20 seconds, and then dried.

Developer Solution:

| | |
|---|---|
| Metol | 3.0 g |
| Anhydrous sodium sulfite | 45.0 g |
| Hydroquinone | 12.0 g |
| Sodium carbonate, monohydrated | 80.0 g |
| Potassium bromide | 2.0 g |
| Water to make 1 liter | |

Each sample was measured with respect to its absorption spectra in the visible region before and after the immersion in the developer solution, and the decoloration rate of each sample was found from the difference in the absorbance in its absorption maximum wavelength, and the obtained results are as shown in Table 1.

$$\text{Decoloration rate} = \frac{E_1 - E_2}{E_1} \times 100(\%)$$

wherein $E_1$ is the absorbance before the immersion into the developer solution, and $E_2$ is the absorbance after the immersion.

Table 1

| Sample | Dye | Decoloration rate |
|---|---|---|
| 1 | Invention's Exemplified Dye (13) | 100 % |
| 2 | " (14) | 100 % |
| 3 | " (15) | 100 % |
| 4 | Comparative Dye (A) | 88 % |
| 5 | " (B) | 92 % |

As is apparent from Table 1, these dyes of this invention show excellent decolorability as compared to the comparative dyes.

**EXAMPLE 2**

A silver chloroiodobromide gelatin emulsion comprising 80 mole% silver chloride, 19 . 5 mole% silver bromide and 0. 5 mole% silver iodide and having an average grain size of 0.32 µm was prepared. To this gelatin emulsion were added 35 ml of an aqueous 1% sodium 2,4-dichloro-6-hydroxy-1,3,5-triazine solution and 50 ml of an aqueous 10% saponin solution per kg of the gelatin emulsion (containing 48g of silver and 75g of gelatin), and this liquid was coated on a subbed polyethylene terephthalate film support so that the coating weight of

silver was 50 mg/100cm$^2$, and then dried.

Further on this emulsion layer was coated a protective layer having the following composition containing Exemplified Dye (13) of this invention so that its dry thickness was 2 µm. This sample was regarded as Sample 6.

Protective Layer's Composition:

| | |
|---|---|
| Gelatin | 40 g |
| Water | 850 ml |
| Exemplified Dye (4) (2% aqueous solution) | 100 ml |
| Sodium 2,4-dichloro-6-hydroxy-1,3,5-triazine (aqueous 1% solution) | 20 ml |
| Saponin (aqueous 10% solution) | 30 ml |

Further, Samples 7, 8, 9 and 10 were prepared in the same manner as in the above sample except that Exemplified Dyes (16) and (18) and the Comparative Dyes (A) and (B) that were used in Example 1 were used in place of the Exemplified Dye (13).

These samples were cut into small pieces, and the pieces were exposed through a photographic wedge, and then processed by using the following compositions-having developer solution nd fixer solution. The pieces of each sample were developed at 20°C for 1.5 minutes, fixed at 20°C for 2 minutes, and washed at 20°C for 5 minutes, and then dried.

Developer Solution:

| | |
|---|---|
| Hydroquinone | 15 g |
| Formaldehyde-sodium hydrogensulfite adduct | 55 g |
| Anhydrous sodium sulfite | 3 g |
| Sodium carbonate, monohydrated | 80 g |
| Boric acidd | 5 g |
| Potassium bromide | 2.5g |
| Disodium ethylenediaminetetraacetate | 2 g |
| Water to make 1,000 ml | |

Fixer Solution:

| | |
|---|---|
| Sodium thiosulfate | 160 g |
| Anhydrous sodium sulfite | 14 g |
| Glacial acetic acid | 12 ml |
| Borax | 12 g |
| Potassium alum | 5 g |
| Water to make 1,000 ml | |

Ten pieces of each processed sample were piled up to examine the presence of dye stain therein. The results obtained are as shown in the following Table 2.

Table 2

| Sample | Dye | Dye stain |
|---|---|---|
| 6 | Invention's Exemplified Dye (13) | None |
| 7 | " (16) | None |
| 8 | " (18) | None |
| 9 | Comparative Dye (A) | Present |
| 10 | " (B) | Present |

The samples in which the comparative dyes were used show the presence of dye stain, while the samples in which the dyes of this invention were used are excellent in the elution and decoloration characteristics with no dye stain at all. Also, the samples containing the dyes of this invention have no adverse effects such as fogging, desensitization, etc., upon the photographic emulsion, and show excellent filtering effects.

## EXAMPLE 3

A silver chlorobromide emulsion comprising 70 mole% silver chloride and 30 mole% silver bromide and having an average grain size of 0.3 µm was prepared. To this were added 20 ml of an aqueous 1% formalin solution and 50 ml of an aqueous 10% saponin solution per kg of this emulsion (containing 48 g of silver and 75 g of gelatin), and this liquid was coated on a subbed polyethylene terephthalate film support. Further on this emulsion layer was coated a protective layer having the following composition:

Protective Layer's Composition:

| | |
|---|---|
| Gelatin | 40 g |
| Water | 960 ml |
| Formalin (aqueous 1% solution) | 120 ml |
| Saponin (aqueous 10% solution) | 30 ml |

Subsequently, on the back of the support coated with the emulsion layer and protective layer was coated a gelatin layer having the following composition containing a dye so that its thickness was 3 µm. This sample was regarded as Sample 11.

Gelatin Layer's Composition:

| | |
|---|---|
| Gelatin | 50 g |
| Water | 835 ml |
| Invention's Exemplified Dye (1) (aqueous 2% solution) | 100 ml |
| Formalin (aqueous 1% solution) | 15 ml |
| Saponin (aqueous 10% solution) | 50 ml |

Samples 12 and 13 were prepared in the same manner as in the above sample except that Exemplified Dye (2) and the following Dye (C) were used in place of the Exemplified Dye (1) of this invention.

Comparative Dye (C)

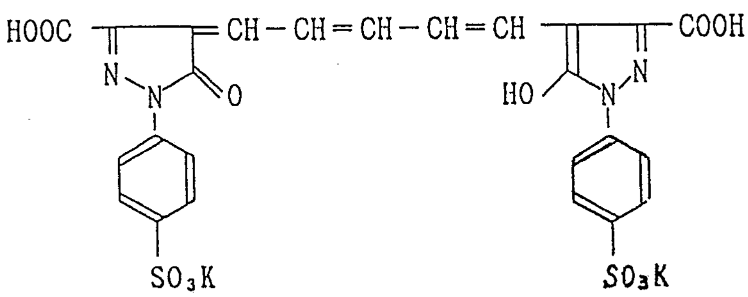

These samples obtained in above were processed in the same manner as in Example 2, and ten pieces of each of the samples were piled up to be examined for dye stain evaluation. The results obtained are as given in Table 3.

Table 3

| Sample | Dye | Dye stain |
|---|---|---|
| 11 | Invention's Exemplified Dye (1) | None |
| 12 | " (2) | None |
| 13 | Comparative Dye (C) | Present |

As is shown in Table 3, the sample in which the comparative dye was used shows the presence of a dye stain, but the samples in which the dyes of this invention were used show no dye stain at all. Also it is apparent that the dyes of this invention enable to obtain a light-sensitive material having an excellent antihalation effect without exerting such bad influence as fogging, desensitization, etc., thereupon.

**EXAMPLE 4**

A color photographic light-sensitive material (Sample 14) was prepared by coating on a polyethylene-laminated paper support the following layers in order from the support side.

Layer 1: A blue-sensitive silver halide emulsion layer (a silver chlorobromide emulsion layer containing 90 mole% silver bromide and sensitized by a sensitizing dye) containing α-pivalyl-α-(1-benzyl-2-phenyl-3,5-dioxotriazolizine-4-yl)-2′-chloro-5′-[γ-(2,4-di-t-amylphenoxy)butylamido]acetanilide as a yellow coupler, dichlorotriazine as a hardening agent and saponin as a surface active agent was coated so that the coating weight of silver was 3.5 mg/100 $cm^2$.

Layer 2: A gelatin layer (intermediate layer) was coated.

Layer 3: A green-sensitive silver halide emulsion layer (a silver chlorobromide emulsion layer containing 80 mole% silver bromide and sensitized by a sensitizing dye) containing 1-(2,4,6-trichlorophenyl)-3-[3-(2,4-di-t-amylphenoxyacetamido)benzamiddo]-5-pyrazolone as a magenta coupler, dichlorotriazine as a hardening agent and saponin as a surface active agent was coated so that the coating weight of silver was 4.5 mg/100$cm^2$.

Layer 4: A gelatin layer (intermediate layer) was coated.

Layer 5: A red-sensitive silver halide emulsion layer (a silver chlorobromide emulsion layer containing 75 mle% silver bromide and sensitized by a sensitizing dye) containing 2,4-dichloro-3-methyl-6-(2,4-di-t-amylphenoxyacetamido)phenol as a cyan coupler, dichlorotriazine as a hardening agent and saponin as a surface active agent was coated so that the coating weight of silver was 2.0 mg/100$cm^2$.

Layer 6: A gelatin layer (protective layer) was coated.

Futher, another green-sensitive emulsion (as a coating liquid for Layer 3). to which Exemplifed Dye (14) of this invention or Comparative Dye (D) in the form of an aqueous 2% solution was added in an amount of 200 ml per kg of the emulsion, was prepared. This emulsion was used in place of the above Layer 3 to prepare Samples 15 and 16 in the same manner as in the above Sample 14.

Comparative Dye (D)

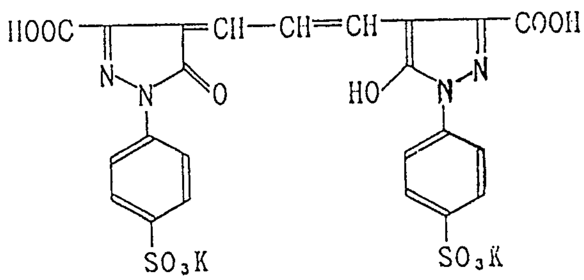

Each of these Samples 14, 15 and 16 was exosed and then processed in accordance with the following processing steps:

| Processing Steps at 31°C | Processing Time |
|---|---|
| 1. Color developing | 3 minutes |
| 2. Bleach-fix | 1 minute |
| 3. Washing | 2 minutes |
| 4. Stabilizing | 1 minute |
| 5. Washing | 2 minutes |

The compositions of the processing solutions that were used in the above steps are as follows:

Color Developer Solution:

| | |
|---|---|
| 4-Amino-3-methyl-N-ethyl-N-(β-hydroxyethyl)aniline sulfate | 4.8 g |
| Anhydrous sodium sulfite | 4.0 g |
| Hydroxyamine 1/2 sulfate | 2.0 g |
| Anhydrous potassium carbonate | 28.0 g |
| Potassium bromide | 1.5 g |
| Potassium hydroxide | 1.0 g |
| Water to make 1 liter. | |

Bleach-Fix Bath:

| | |
|---|---|
| Ferric ethylenediaminetetraacetate | 65.0 g |
| Disodium ethylenediaminetetraacetate | 3.0 g |
| Anhydrous sodium sulfite | 9.5 g |
| Ammonium thiosulfate | 77.5 g |
| Anhydrous sodium carbonate | 4.0 g |
| Water to make 1 liter. | |

Fixer Bath:

| | |
|---|---|
| Glacial acetic acid | 9 ml |
| Sodium acetate | 3 g |
| Water to make 1 liter. | |

Densities of the unexposed areas of the processed samples are shown in Table 4.

Table 4

| Sample | Dye | Density of unexposed area | | |
|---|---|---|---|---|
| | | Density through blue filter | Density through green filter | Density through red filter |
| 14 | None | 0.03 | 0.03 | 0.02 |
| 15 | Exemplified Dye (14) | 0.03 | 0.03 | 0.02 |
| 16 | Comparative Dye (D) | 0.03 | 0.06 | 0.02 |

As is apparent from Table 4, the sample containing the dye of this invention does not show any such residual

dye stain as seen in the sample containing the comparative dye. Also, by comparison between the sensitivites of the respective samples, the dye of this invention is found out to have very little bad influence upon the emulsion. In addition, the sample to which the dye of this invention was added has a high image sharpness and an excellent antiirradiation effect.

## EXAMPLE 5

Preparation of Emulsion:

To one liter of a solution containing 130 g of KBr, 2.5 g of KI, 30 mg of 1-phenyl-5-mercaptotetrazole and 15 g of gelatin, with stirring, were added 500 ml of a solution containing 0.5 mole ammoniacal silver nitrate, spending about one minute, and 2 minutes after that, acetic acid was added to the mixture liquid to adjust its pH to 6.0. Further, one minute later, 500 ml of an aqueous 0.5 mole silver nitrate solution were added spending one minute to the mixture liquid and it was stirred for 15 minutes, and then to it was added a formalin condensate of sodium naphthalenesulfinate and an aqueous magnesium sulfate solution to thereby aggregate the emulsion. After removing the supernatant, to the product were added 2 liters of warm water at 40° C, and after 10-minute stirring, to the liquid was added an aqueous magnesium sulfate solution again to thereby aggregate the emulsion. After removing the supernatant, 300 ml of a 5% gelatin solution were added ot the product, and the mixture was stirred for 30 minutes at 55° C, whereby a comparative emulsion sample was prepared. This emulsion contained silver halide grains the average grain diameter of which was 0.40 μm and 90 % of the whole of which were within the grain size range of from 0.20 μm to 0.70 μm. To this emulsion were added per mole of silver halide 20.0 mg of ammonium thiocyanate, 5.0 mg of chloroauric acid and 15.0 mg of sodium thiosulfate pentahydrated as chemical sensitizers. Ninety minutes after the addition of the above chemical sensitizers at 52° C, the sensitizing dye shown in Table 5 was added, and then 100 minutes later, 1.5 g of 4-hydroxy-6-methyl-1,3,3a,7-tetrazaindene were added to the emulsion to thereby perform its chemical ripening. After that the emulsion was cooled to be set.

Preparation of Samples:

Firstly, a backing layer liquid containing 400 g of gelatin, 2 g of polymethyl methacrylate, 6 g of sodium dodecylbenzenesulfonate, 20 g of the following antihalation dye, N,N′-ethylene-bis(vinylsulfonylacetamide) and sodium polyethylenesulfonate was prepared and coated along with a protective layer-coating liquid containing gelatin, matting agent (polymethyl methacrylate; average particle size 3.5 μm), glyoxal, sodium t-octylphenoxyethoxyethanesulfonate,

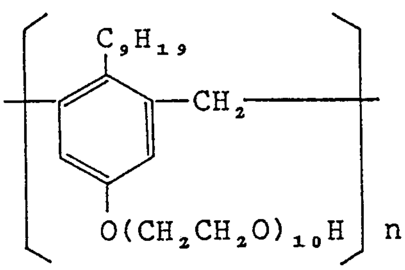

(a mixture of n = 2 through 5),

$C_8F_{17}SO_2N(C_3H_7)CH_2COOK$, and
$C_8F_{17}SO_2N(C_3H_7)(CH_2CH_2O)_{15}H$
on one side of a polyethylene terephthalate base which was subbed with an aqueous copolymer-dispersed liquid obtained by diluting a copolymer to be in a concentration of 10 % by weight, the copolymer being composed of three monomers: 50 % by weight glycidyl methacrylate, 10 % by weight methyl methacrylate and 40 % by weight butyl methacrylate, whereby a backing layer-coated support was prepared. The coated weights of gelatin of the backing layer and the protective layer were 2.5 g/m² and 2.0 g/m², respectively.

The antihalation dye that was used in the above is the foregoing Dye Compound (D).

Subsequently, to the aforementioned chemically ripened emulsion were added per mole of silver halide 10 g of trimethylol-propane, 50 mg of nitrophenyl-triphenyl-phosphonium chloride, 1 g of ammonium 1,3-dihydroxybenzene-4-sulfonate, 10 mg of sodium 2-mercaptobenzimidazole-5-sulfonate, 35 mg of

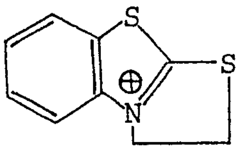 $CH_3SO_3^{\ominus}$ ,

1 g of 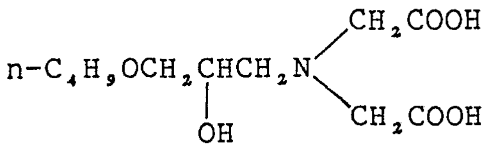 ,

10 mg of 1,1-dimethylol-1-bromo-1-nitromethane, 100 mg of

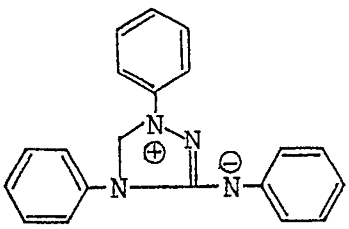

and the foregoing Dye (13) of this invention, whereby an emulsion to be coated were prepared.

Further, a protective layer-coating liquid was prepared as follows:

The protective layer-coating liquid is of the following composition, wherein each adding amount is per liter of the coating liquid.

Lime-treated inert gelatin 68 g

Acid-treated gelatin 2 g

$CH_2COOC_{10}H_{21}$
|
$NaO_3S-CH-COOC_5H_{11}$ (coating aid) 1 g

Polymethyl methacrylate (matting agent having an areal average particle size of 3.5 μm) 1.1 g

Silicon dioxide particles (matting agent having an areal average particle size of 1.2 μm) 0.5 g

Ludox AM (product of DuPont)(colloidal silica) 30 g

Sodium 2,4-dichloro-6-hydroxy-1,3,5-triazine (aqueous 2 % solution)(hardener) 10 ml

Formalin (aqueous 35 % solution)(hardener) 2 ml

Glyoxal (aqueous 40 % solution)(hardener) 1.5 ml

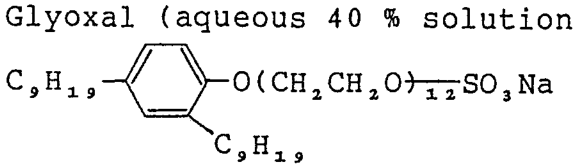

1.0 g

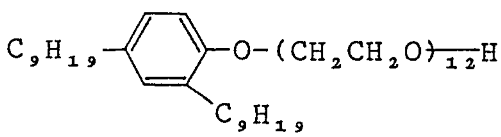

0.4 g

$CH_2COO(CH_2)_3CH_3$
|
$CHCOO(CH_2)_2CH(CH_3)_2$ 0.3 g
|
$SO_3Na$

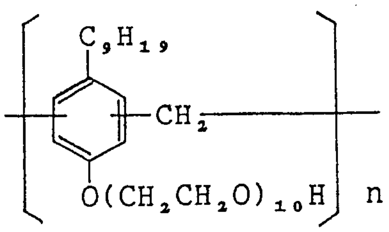 (a mixture of n = 2 through 5) 2.5 g

$NaO_3S-CH-COOCH_2(C_2F_4)_3H$
$\quad\quad\quad CH_2COOCH_2(C_2F_4)_3H$ 0.5 g

$F_{19}C_9-O-(CH_2CH_2O)_{10}-CH_2CH_2-OH$ 3 mg

$C_4F_9SO_3K$ 2 mg

On the foregoing backing layer-coated support base the silver halide emulsion and protective layer-coating liquid were superposedly coated simultaneously in accordance with the slide-hopper method in order from the support side at a coating rate of 60 meters/min, whereby samples were obtained. The coating weight of silver was 2.5 g/m$^2$ and those of gelatin were 3 g/m$^2$ for the emulsion layer and 1.3 g/m$^2$ for the protective layer.

Each of the thus coated samples was allowed to stand for three days under an atmospheric condition of 23°C/55% RH to thereby stabilize the hardening of its layers, and then each sample was exposed to a green light. Each sample was then processed at 35°C for 45 seconds in an automatic X-ray film processor manufactured by Konica Corporation (Konica X-Ray Automatic Processor SRX-501). As for the processing solutions, a developer solution (Konica XD-SR) and a fixer solution (Konica XF-SR) for the X-ray automatic processor manufactured by Konica Corporation were used.

Each of the processed samples was evaluated with respect to its fog and sensitivity. Regarding the sensitivity, the common logarithm of the reciprocal of the exposure necessary to give a 'fog + 1.0' density of each sample was found, which was indicated in a relative value to the sensitivity of Sample No.1 regarded as 100. The results are as given in Table 5.

Table 5

| Sample | Sensitizing dye, added amount*(mg) | | Dye of the invention and added amount*(mg) | | Photographic characteristics | | Remarks |
|---|---|---|---|---|---|---|---|
| | | | | | Fog | Sensitivity | |
| 1 | a) | 10 | -- | | 0.03 | 100 | Comparative |
| 2 | a) | 50 | -- | | 0.03 | 110 | Comparative |
| 3 | a) | 100 | -- | | 0.05 | 90 | Comparative |
| 4 | a) | 10 | Dye (13) | 10 | 0.03 | 115 | Invention |
| 5 | a) | 10 | Dye (13) | 20 | 0.03 | 120 | Invention |
| 6 | a) | 10 | Dye (13) | 40 | 0.03 | 126 | Invention |
| 7 | a) | 10 | Dye (13) | 90 | 0.03 | 144 | Invention |
| 8 | a) | 50 | Dye (13) | 50 | 0.03 | 141 | Invention |
| 9 | a) | 100 | Dye (13) | 50 | 0.05 | 140 | Invention |
| 10 | a) | 100 | Dye (13) | 100 | 0.05 | 153 | Invention |

* The added amount is a value per mole of silver halide.

Sensitizing Dye a)

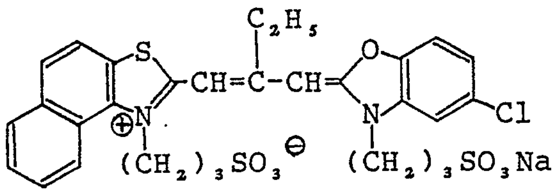

As is apparent from Table 5, the dye of this invention, when used in combination with an appropriate sensitizing dye, improves the photographic sensitivity.

## Claims

1. A silver halide photographic light-sensitive material comprising a hydrophilic colloid layer containing a dye represented by the following Formula I;

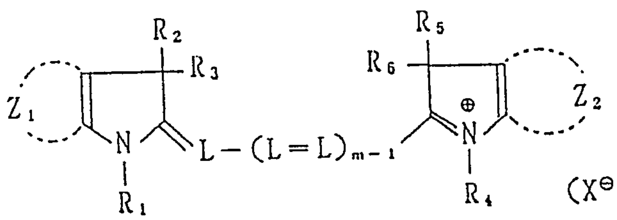

(I)

wherein $R_1$, $R_2$, $R_3$, $R_4$, $R_5$ and $R_6$ each represents an alkyl group; $Z_1$ and $Z_2$ each represents a group of non-metal atoms necessary to form a condensed benzene ring or a condensed naphthalene ring, provided that at least three of those groups represented by $R_1$, $R_2$, $R_3$, $R_4$, $R_5$, $R_6$, $Z_1$, and $Z_2$ are acid groups or groups substituted by an acid group; L represents a methine group; $X^{\ominus}$ represents an anion; m is an integer of 1, 2, or 3; and n is an integer of 1 or 2, provided that the n is 1 when the dye forms an intramolecular salt.

2. The material of claim 1, wherein said acid group is a sulfo group, a carboxy group, a phosphoric acid group, phosphinic acid group, phosphate group or phophoric acid amido group.

3. The material of claim 1, wherein said hydrophilic colloid layer containing said dye is a silver halide emulsion layer.

4. The material of claim 1, wherein said hydrophilic colloid layer containing said dye is a non-light-sensitive layer.

5. The material of claim 4, wherein said hydrophilic colloid layer is a backing layer.

6. The material of claim 4, wherein said hydrophilic colloid layer is an anti-halation layer.

7. The material of claim 4, wherein said hydrophilic colloid layer is a filter layer layer.

European Patent Office

# EUROPEAN SEARCH REPORT

Application Number

EP 89 30 4957

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 251 282 (KODAK) * Claims * | 1-7 | G 03 C 1/84 |
| Y | PATENT ABSTRACTS OF JAPAN, vol. 11, no. 340 (P-634)[2787], 7th November 1987; & JP-A-62 123 454 (FUJI PHOTO FILM CO., LTD) 04-06-1987 * Abstract * | 1-7 | |
| Y | J.M. EDER et al.: "Ausführliches Handbuch der Photographie", 3rd edition, vol. 3, 1932, part 3: "Sensibilisierung und Desensibilisierung", Verlag von Wilhelm Knapp, Halle, Saale, DE * Chapter V, part C: "Indozyanine"; pages 77-80 * | 1 | |
| Y | T.H. JAMES et al.: "The theory of the photographic process", 4th edition, pages 194,203, MacMillan Publishing Co., Inc., New York, US * Table 8.3, 4th row * | | TECHNICAL FIELDS SEARCHED (Int. Cl.4) |
| | | | G 03 C |

The present search report has been drawn up for all claims

| Place of search | Date of completion of the search | Examiner |
|---|---|---|
| THE HAGUE | 29-08-1989 | BUSCHA A.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document